# DEMANDE DE BREVET EUROPEEN

(11) **EP 1 853 040 A1**
(43) Date de publication de la demande: **07.11.2007**
(21) Numéro de dépôt: 07290563.1
(22) Date de dépôt: 04.05.2007
(51) Int. Cl.: H04L 29/06

(54) **Système de communication et terminaux de visualisation à basse consommation convenant à un tel système**

(30) Priorité: 04.05.2006 FR 0605159
(71) Demandeur: Zodianet, 91120 Palaiseau (FR)
(72) Inventeur: Gauthier, Jean-Pierre, 91120 Palaiseau (FR)
(74) Mandataire: Bredema

(57) **Abrégé**

La présente invention concerne un procédé et un système d'édition de contenus hétérogènes provenant d'un réseau, comprenant un serveur antémémoire connecté audit réseau et une pluralité de terminaux légers connectés audit serveur antémémoire.

Les terminaux légers disposent d'un moyen unique d'édition des contenus hétérogènes.Le serveur antémémoire dispose de moyens de récupération asynchrone des contenus de formats hétérogènes comprenant un espace mémoire pour l'enregistrement d'un ensemble d'adresses réseaux de contenus groupées selon des critères définis par un utilisateur, dé moyens de réception desdits contenus correspondant chacun à l'un des formats, de moyens de transformation des contenus provenant desdits moyens de réception sous des formats hétérogènes en des contenus enregistrées dans des bases du serveur antémémoire sous un format commun, et de moyens de regroupement des contenus par association à chacun desdits contenus d'un identifiant unique et d'ajout dudit identifiant, dans une table associée au groupe auquel appartient l'adresse réseau d'origine dudit contenu, la table étant stockée dans ladite base de données des contenus.

## Description

La présente invention concerne un système domestique de communication avec des serveurs présents sur Internet et de petits terminaux de visualisation à basse consommation convenant à un tel système.
Le large déploiement de l'Internet haut débit et d'un canal de communication bidirectionnel établi en permanence entre le « monde » et l'habitat va modifier notre manière d'accéder à des informations distantes dans notre quotidien. En mettant en perspectives les sources d'informations disponibles sont apparus antérieurement dans un foyer (température, pendule, téléphone, courrier, radio, télévision, etc...), les services Internet apparaissent d'une complexité sans commune mesure et demandent d'importants efforts d'apprentissage de la part de ses utilisateurs. Par exemple, il est stupéfiant de constater à quel point la paralysie peut devenir totale lorsqu'on est invité à se servir de l'assistant personnel et même le téléphone portable haut de gamme et multifonctions de son congénère...
A contrario, les services Internet pourraient également apparaître de manière simplifiée et réduite à des fonctions dédiées au travers de nouveaux objets communicants. Par exemple, le thermomètre de salon pourrait directement donner en sus (grâce à Internet) la météo de son quartier pour le lendemain, sans pour cela avoir une ergonomie plus complexe et sans effort d'apprentissage.
Dans cet état d'esprit, le dispositif objet de l'invention permet de consulter des informations émanant d'Internet de manière simple, sur de petits terminaux selon des moyens aptes à leur fabrication à faible coût et à leur assurer une grande autonomie (supérieure à un an) compatible avec les piles existantes. Selon une autre caractéristique de l'invention, tout type d'information textuelle existante ou à venir peut être consulté sur lesdits terminaux indépendamment de leur origine, par exemple serveur email, serveur HTTP (Hypertext Transfert Protocol) ou RSS (Really Simple Syndication) etc... Ce point est important dans ma mesure où les moyens mis en oeuvre pour réaliser ces terminaux sont modestes et ne permettent pas une mise à jour aisée du programme les contrôlant, ce qui empêche à priori toute évolution, notamment l'ajout d'un langage ou d'un protocole, a contrario avec la base qui est plus apte à supporter des mises à jour.

La demande de brevet français FR 0411822 du 5 novembre 2004 décrit un dispositif portant sur la consultation de courriels à partir de terminaux simple d'utilisation selon sur une structuration arborescente « utilisateurs-comptes-messages », qui possède l'inconvénient d'une part de présenter une corrélation forte entre des structures de données complexes de cette base et des terminaux, et d'autre part de rendre un service figé non évolutif.

La demande de brevet français FR 0401312 du 10 Février 2004 décrit un dispositif antémémoire de courriers électroniques apte à la réalisation de terminaux sans fil à basse consommation utilisant ce principe d'antémémoire de messages emails mémorisés dans une base locale selon des dispositions propres. Ce dispositif fournit une architecte générale permettant la réalisation de terminaux à faible consommation selon un modèle « client-serveur local ».

Le dispositif objet de la présente invention offre la possibilité de consulter de multiples services disponibles sur des serveurs disposés sur Internet. Les terminaux visualisent aux utilisateurs des informations sans connaître la nature de ces informations et donc sans corrélation forte avec un service spécifique et des structures de données. Cette propriété permet de réaliser des terminaux polyvalents. Le dispositif objet de la présente invention utilise le dispositif français FR 0401312 du 10 Février 2004 (ou un autre dispositif que lui serait analogue) comme un élément constitutif sur lequel il s'appuie pour acquérir les courriels disponibles sur Internet avant de les convertir et les mémoriser selon des dispositions propres à l'invention.

A cet effet, l'invention concerne, tout d'abord, un procédé pour l'accès, par un terminal, à des contenus numériques hétérogènes disponibles à des adresses réseau d'un réseau, le procédé comprenant :
- une première étape asynchrone, exécutée exclusivement sur un serveur antémémoire disposant de ressources mémoires et de traitement :
   o de consultation d'adresses réseau par le serveur antémémoire pour la récupération de contenus numériques, ladite consultation étant effectuée à l'initiative dudit serveur antémémoire selon des paramètres d'adresses réseau stockées dans une base de données de paramètres sous forme de groupes d'adresses par rapport à des critères fixés par un utilisateur,
   o lesdites adresses réseaux correspondant à des sources de contenus hétérogènes et
   o de prétraitement des contenus, consistant à identifier l'adresse réseau de provenance dudit contenu récupéré, et à déterminer, dans ladite base des paramètres, ledit groupe auquel est associée ladite adresse,
   o de stockage desdits contenus reçus, dans une base de données de contenus dudit serveur antémémoire, chacun des contenus étant converti et enregistré dans un format commun quelque soit le format d'origine afin de rendre ledit contenu prétraité directement visualisable sur un terminal léger,
   o d'association à chacun desdits contenus d'un identifiant unique et d'ajout dudit identifiant, dans une table associée audit groupe déterminé et stockée dans ladite base de données des contenus
- une étape de transmission, en réponse à une requête contenant un paramètre d'adresse réseau émise par ledit terminal, d'au moins une partie du contenu associé audit paramètre contenu dans la requête te stocké dans la base de données de contenus,
- une étape d'affichage de ladite partie de contenu par le terminal léger disposant d'un moyen unique d'édition des contenus hétérogènes.

Selon divers modes de réalisation, il est prévu que :
- le procédé comprend, en outre, une étape de conversion d'une desdites tables d'indexation en un contenu au format commun et une étape de transmission au terminal dudit contenu correspondant à la table d'indexation. Eventuellement, ledit terminal dispose de moyens de navigation entre les différents identifiants uniques de la table et de pointage de l'un desdits identifiants pour constituer une requête à destination dudit serveur antémémoire,
- ledit terminal est généralement dans un état de veille et se réveille de l'état de veille pour transmettre ladite requête et revient dans l'état de veille à réception de la réponse à ladite requête,
- ledit terminal est équipé d'un module de communication sans fil pour se connecter audit serveur antémémoire et en ce que ledit module de communication se réveille périodiquement pour détecter la présence d'une porteuse émise par ledit serveur antémémoire,
- ledit serveur antémémoire se connecte périodiquement à un serveur distant et télécharge des données pour mettre à jour les paramètres enregistrés dans la base de données des paramètres.

L'invention a également pour objet un système d'édition de contenus hétérogènes provenant d'un réseau, le système comprenant un serveur antémémoire connecté audit réseau et une pluralité de terminaux légers connectés audit serveur antémémoire,
- les terminaux légers disposant d'un moyen unique d'édition des contenus hétérogènes,
- le serveur antémémoire disposant
   o des moyens de récupération asynchrone des contenus de formats hétérogènes comprenant un espace mémoire pour l'enregistrement d'un ensemble d'adresses réseaux de contenus groupées selon des critères définis par un utilisateur,
   o de moyens de réception desdits contenus correspondant chacun à l'un des formats
   o de moyens de transformation des contenus provenant desdits moyens de réception sous des formats hétérogènes en des contenus enregistrées dans des bases du serveur antémémoire sous un format commun,
   o de moyens de regroupement des contenus par association à chacun desdits contenus d'un identifiant unique et d'ajout dudit identifiant, dans une table associée au groupe auquel appartient l'adresse réseau d'origine dudit contenu, la table étant stockée dans ladite base de données des contenus
   o de moyens de communication aptes à transmettre, sur requête d'un desdits terminaux, au moins une partie de contenu associé à un paramètre, ledit paramètre étant contenu dans ladite requête du terminal.

Selon un mode de réalisation, lesdits groupes d'adresses réseaux sont réunis en métagroupes et en ce que ladite base de données de contenus comprend des tables associées auxdits métagroupes référençant des identifiants uniques des tables associées aux groupes réunis.
Eventuellement, lesdits moyens de traitement sont aptes à convertir lesdites tables associées aux groupes et/ou métagroupes en des contenus dans le format commun pour permettre leur affichage par les terminaux.
Particulièrement,
- lesdits moyens de récupération sont aptes à collecter des informations présentées sur un réseau par différents serveurs pouvant être de différente nature,
- lesdits moyens de regroupement sont agencés pour effectuer lesdites associations selon des règles fixes ou variables disposées dans une mémoire de paramètres,
- ledit serveur antémémoire est apte à fournir auxdits terminaux le contenu desdites données de manière fractionnée en référence à un identifiant de données à réception d'une requête desdits terminaux,
- ladite pluralité de terminaux disposant d'un écran de visualisation et de moyens logiciels agencés pour naviguer entre lesdites données.

L'invention peut également concerner un système de communication comprenant une pluralité de terminaux domestiques sans fil connectés à une même base par un sous-réseau sans fil et une interface, système dans lequel :
- ladite base est apte à collecter des informations présentées sur un réseau par différents serveurs pouvant être de différente nature et à convertir lesdites informations en données selon un format commun et les stocker dans une base données locales,
- ladite base est apte à lier lesdites données par d'autres données comportant des référencements vers lesdites données, selon des règles fixes ou variables disposées dans une mémoire de paramètres,
- ladite base est apte à fournir auxdits terminaux le contenu desdites données de manière fractionnée en référence à un identifiant de données à réception d'une requête desdits terminaux,
- ladite pluralité de terminaux disposant d'un écran de visualisation et de moyens logiciels agencés pour naviguer entre lesdites données.

Selon une caractéristique de l'invention, les données utiles à visualiser sur les terminaux sont unifiés selon un format commun de représentation et reliées selon un principe de page hypertexte déjà bien connu de l'art antérieur, notamment avec le langage «HTML» (HyperText Markup Language), qui fait office de moyen de navigation entre entités. Le principe seul est ici à retenir car les terminaux pour des raisons de coût, ne peuvent embarquer, au moins à cours terme, un « navigateur » pouvant interpréter toutes des potentialités du «HTML». Le terme de *mini-page* est retenu dans la suite du document pour désigner une page générée par le dispositif objet de l'invention. Néanmoins, les terminaux sans fil visés ici ne peuvent se satisfaire du « HTML » et de « HTTP » même réduits car leurs contraintes en terme de ressource mémoire et de consommation d'énergie ne le permettent pas, même si les notions de balise ou « tag » et de lien d'adresse hypertexte sont ici reprises : pour rappel, les balises servent à la structuration, la mise en forme particulière du texte ; le lien hypertexte donne une référence à une entité ou page externe qui va permettre de naviguer entre entités.
Pour garantir une autonomie maximale aux terminaux, il est inutile de leur transmettre des informations non utiles, à savoir les informations non affichées sur son écran sur l'instant ou à proximité immédiate, car la probabilité est grande que la totalité des informations d'une mini-page ne soit pas lue jusqu'à sa fin. La transmission de données par radiofréquences impose une segmentation par paquet de sorte que les informations non affichées sur l'écran du terminal et en dehors du paquet courant, impose la transmission de paquets supplémentaires, de sorte que d'un point de vue énergétique, il est préférable de retarder celle-ci jusqu'à ce qu'elle soit incontournable, car sollicitée par l'avancée de la lecture de l'utilisateur dans la mini-page. Cette interaction entre couches fonctionnelles de communication est en violation du modèle OSI (Open System Interconnection) de l'ISO (International Organization for Standardization) définissant 7 niveaux. Conformément au modèle OSI, la couche de session « HTTP » est indépendante de la couche de présentation « HTML », agnostique de son contenu, et impose le chargement total d'une page, ce qui en fait un protocole inadéquate sur le fond pour la transmission de données vers des terminaux à très basse consommation. Le langage « HTML » permet une navigation intra page par hypertexte sous forme de section bornée par des balises qui évoque la notion de paragraphes « indexables » mais dont la gestion reste à l'initiative du navigateur « récepteur » et non du serveur de données « émetteur ». En d'autres termes, les pages sont envoyées « complètes ».
Le lecteur pourra se reporter au document RFC1866 disponible sur le site www.ietf.org pour connaître les principes du HTML. Il notera également que le langage XML (Extensible Markup Langage) permet de créer ses propres balises.
Le document RFC2616 définit « HTTP » (Hypertext Transfer protocol) lequel transporte habituellement le « HTML ».

Selon une caractéristique de l'invention, la couche de session est liée à la couche représentation de données de sorte que les transmissions de données se trouvent délimitées d'une part par la taille des paquets manipulés par le réseau sans fil et d'autre part bornées par des balises de segmentation. En considérant qu'un *item* est borné par deux balises spécifiques, chaque transmission est opérée dynamiquement sur les N items qui peuvent être contenus dans un paquet. Ce principe de « cadrage » est particulièrement adapté à la navigation et le défilement dans une liste d'items. On définit ici *l'item* comme une association de type hypertexte, associant un champ graphique visualisé I*v*, une adresse vers une mini-page la et un numéro propre à l'item I*d*. L'item peut en outre posséder des paramètres supplémentaires liés aux fonctions d'affichage.

Le terminal embarque les primitives d'affichage d'un « mini navigateur » lui permettant d'évoluer entre mini-pages avec un système d'entrées/sorties ou « relation homme-machine » simplifié de sorte que les commandes basiques de « click sur lien hypertexte » (appel de page), retour arrière (retour à la page appelante) et scrolling avant /arrière (défilement de texte) soient possibles. Le lecteur surfant habituellement sur Internet sur ordinateur ou assistant personnel PDA (Personal Digital Assistant) n'aura aucun mal à s'imaginer un système ergonomique restreint pour opérer ces opérations, qui peut par exemple prendre la forme de boutons, molette, zone sensitive au toucher, stylet de pointage sur écran. A noter qu'une commande manuelle équivalente au « click droit sur souris » rencontré sur les ordinateurs, et permettant de réaliser une opération spécifique sur l'item pointé, peut appeler une mini-page spécifique d'items de commandes de manière homogène avec les données qui sont objets de la navigation de sorte que le problème de « langue » et de « traduction de commandes » se trouve reporté sur la base.

Le rôle essentiel de la base est de créer un asynchronisme entre activités base-Internet et base-terminaux, la zone commune étant une base de données. Le temps d'accès à des serveurs distants disposés sur Internet peut mettre plusieurs secondes et est sujet à des aléas. D'autre part, l'empilement des protocoles mis en oeuvre est lourd et incompatible avec les moyens de micro systèmes légers qui ont peu de puissance et de mémoire pour les traiter. A contrario, une transaction entre terminal et base au travers d'un réseau sans fil domestique, est relativement bornée dans le temps et pratiquement déterministe si l'on fait abstraction des collisions possibles de paquets sur le média hertzien ou du taux d'erreur bit de la communication. Il est de l'ordre de quelques dizaines de millisecondes. En outre l'architecture client/serveur sur lequel s'est construit Internet mène à une activité même si aucune donnée supplémentaire utile n'est disponible et de l'énergie est dépensée en vaines scrutations. Le gain énergétique à utiliser une base intermédiaire entre Internet et terminaux est donc manifeste.

Exprimé succinctement, la base scrute de manière autonome et périodique des serveurs sur Internet et stocke les données rencontrées sous forme d'un « mini-site Web » local lisible par les terminaux. Les adresses où lesdites données sont présentes sur Internet et les interdépendances (liens hypertextes) qui vont donner la structure générale de ce « mini-site Web » sont le fait de la configuration initiale de la base qui les spécifie. L'utilisateur, grâce à son terminal, surfe sur ce « mini-site Web » local fermé et asynchrone à toute activité sur Internet, les échanges base -terminal s'opérant unitairement par fraction de mini-page.

La base dispose d'interfaces frontales adaptées aux services disponibles sur Internet. Lesdites interfaces sont chargées du rapatriement de données stockées dans des ordinateurs distants et de les convertir en un format unifié, c'est-à-dire commun auxdites interfaces.
Les interfaces frontales peuvent être de type « client » ou «serveur». Les services sont par exemple, pop3 (Post Office Version 3) et HTTP, ce dernier supportant nombre de langages de présentation d'informations. Une interface frontale peut également être serveur auquel cas, les informations d'un client distant sont « poussées » à son initiative dans la base et stockées par cette dernière.
La base stocke par défaut les informations émanant des interfaces frontales sous forme de mini-pages consultables par les terminaux. La gestion des interdépendances entre mini-pages, qui donne un « look and feel », est à l'initiative de la base et peut être programmable selon la configuration de cette base. Ainsi les courriels peuvent être rangées et présentés aux terminaux selon un système hiérarchique variable, par exemple par compte email, par ordre d'arrivée dans une liste unique, par classement en « répertoires » etc... Le terminal, se bornant à une activité de navigation hypertexte, n'a pas la nécessité de connaître lesdites interdépendances à l'avance. Il est à noter que les points d'entrées dans la base de données peuvent être multiples car la base peut servir plusieurs types de terminaux n'opérant pas sur les mêmes mini-pages.
Selon une variante fonctionnellement identique, le format de stockage des données peut rester à l'initiative de la base et demeurer « privé » et la génération des mini-pages publiques présentées aux terminaux réalisée à la volée, c'est-à-dire au moment où le terminal fait une requête à la base.

Selon une amélioration où l'arborescence des mini-pages devient plus dynamique, celles-ci peuvent présenter des liens vers des mini-pages non stockées sur la base. Sollicitée sur une mini-page non mémorisée, la base informe le terminal demandeur et l'invite à attendre sous forme d'une attente passive invoquant ses mécanismes internes d'économie d'énergie et à réitérer sa demande après plusieurs centaines de millisecondes, tandis que la base rapatrie les données pointé par le lien considéré.
Pour éviter que les données acquises dynamiquement ne croissent indéfiniment, la base peut décider de les élaguer après un temps donné.

Une mini-page ou un item peut avoir des attributs spécifiques propres à être interprétés et visualisé par un terminal sous forme d'icônes, de modifications de couleurs, ou d'affichage de textes dans une zone particulière dudit terminal. Des balises spécifiques incluses dans la mini-page permettent d'ajouter de telles informations. Ainsi un nouveau courriel peut être signalé par une icône particulière et lorsque que celui si est pointé, ses caractéristiques (taille, heure d'arrivée etc..) affichées dans une zone de texte dédiée. Il en est exactement de même lorsque une page Web a vu son contenu modifié depuis sa dernière scrutation.

Les terminaux permettent d'accéder à des mini-pages contenant des données personnelles dont il faut sécuriser l'accès. Une mini-page peut donc contenir une séquence définissant un mot de passe qui doit être saisie manuellement avant que ladite mini-page commence à être visualisée. La valeur du mot de passe est consignée dans une mémoire sauvegardée.
D'une part, comme les terminaux demeurent très simples et dépouillés en terme d'interface homme-machine, le problème de saisie de code personnel se pose en l'absence de clavier. Selon une caractéristique de l'invention, lors de l'invite du terminal à présenter son code, les fonctions habituelles de l'interface homme-machine se trouvent temporairement suspendues pour ne pas provoquer un comportement incongru et affectées d'un « numéro virtuel » de sorte qu'une suite de ses fonctions entrées manuellement par l'utilisateur représente virtuellement un nombre interprété comme tel par le terminal et comparé par lui au code personnel attendu. A l'usage, l'utilisateur oublie ce numéro et mémorise une séquence gestuelle qu'il exécute rapidement et sans réfléchir avec un moindre désagrément.
D'autre part, les échanges base-terminal doivent également être sécurisés par un algorithme de cryptage selon une méthode de clé partagé qui permet à la fois le cryptage et le décryptage. Selon une disposition de l'invention, les données sont cryptées par défaut mais un bouton disposé sur le boîtier de la base autorise celle-ci, s'il est activé, à émettre la clé de cryptage en clair, pendant quelques minutes au plus, à un terminal qui en ferait la demande ou spontanément au terminal qui présenterait des paquets manifestement cryptés avec une mauvaise clé.

Les mini-pages sont caractérisées par leur caractère de nouveauté ou uniquement de rafraîchissement de données déjà existantes.
Leur origine et leur contenu peuvent permettre de définir des séquences particulières qui vont être interprété par une fonction spécifique pour identifier des commandes de configuration de la base ou des terminaux. Le caractère de nouveauté est important dans la mesure où il permet d'empêcher de « rejouer » de manière inutile une commande ou liste de commandes. Une mini-page est nouvelle quand elle n'existait pas auparavant ou quand son contenu a été modifié. La génération des mini-pages à la mise sous tension du dispositif est à considérer comme des données non nouvelles sauf disposition contraire visant à systématiquement télécharger dans la mémoire 750 (qui n'a alors plus besoin d'être totalement sauvegardée) lors de la mise sous tension des paramètres disponibles sur des pages disponibles sur des serveurs distants.
N'importe quelle interface frontale peut présenter à sa sortie une nouvelle mini-page satisfaisant au critère de nouveauté et possédant une syntaxe particulière, comportant un identifiant de la base et/ou un mot de passe vérifiée par la base, de sorte que ladite page est détournée et interprétée pour configurer la base elle-même. Selon cette caractéristique, la configuration de la base peut être effectuée par page HTTP acquise en tant que client ou serveur, ou simplement courriel.
Ainsi par défaut et selon la configuration usine, la base peut scruter une page spécifique Ps disposée sur un serveur HTTP ou un compte de courriel C*c* spécifique. Un opérateur ou un automate distant, par exemple de type prestataire de service, peut configurer la base d'un usager, lorsque celui-ci ne possède par d'ordinateur, par simple mise à disposition des informations de configuration sur ladite page Ps dans un courriel émis vers le compte C*c*.
La procédure est la suivante pour ouvrir un nouveau compte email à partir d'une page web:
- l'usager appelle l'opérateur et lui fourni l'identifiant de sa base avec éventuellement un mot de passe aléatoire lisible sur un terminal. A noter que si ce nombre aléatoire est très grand tel que deux usagers ont une probabilité très faible de posséder ce même mot de passe, l'identifiant de la base peut être omis. Cette probabilité peut être affaiblie si l'usager spécifie à sa base par un moyen quelconque (comme un bouton) que celle-ci doit être réceptive pendant un temps donné à la configuration d'un compte email.
- Il négocie lui avec le nom de sa future adresse email, son nom de compte, son alias, mot de passe sur le serveur de mails etc...
- L'opérateur crée alors une page Ps avec ses éléments et la rend disponible sur Internet.
- La page Ps est alors lue de manière asynchrone par la base qui va alors l'interpréter comme une commande de configuration d'une boite email. Il est à noter que l'accès à ladite page peut être limitée et contrôlée par le serveur distant de la page Ps par les paramètres fournies dans la requête de la base de sorte que si plusieurs bases (fournissant donc des paramètres différents) lisent cette page, seule la base possédant des paramètres reconnus par le serveur distant verra sa requête honorée.

La procédure suivie est analogue lorsque les éléments de la page Ps sont déposés dans un courriel disposé sur un serveur de messages électroniques.

Selon une autre caractéristique de l'invention, ces échanges entre usager et opérateur peuvent être supprimés afin de permettre l'affichage sur les terminaux de pages de publicité ou d'informations générales selon un système de « location ».
La procédure est la suivante pour permettre cette diffusion d'informations:
- Les bases disposées chez les usages scrutent périodiquement une page Pm dite « maître » disposée sur un serveur spécifique Sm de diffusion détenu par le « loueur ». La période de scrutation Tm de cette page peut être élevée (une fois par jour par exemple) car elle est liée uniquement à la durée minimale d'une location (bail).
- Cette page contient une commande de configuration de tierces pages Pv dans lesdites bases. Les informations contenues dans la page maître Pm ne sont pas affichées sur les terminaux mais servent uniquement à la configuration desdites bases.
- Une fois les paramètres des pages Pv introduites dans les bases, les pages Pv sont lues périodiquement sur des serveurs Sv disposés chez les « locataires » et mises à disposition des terminaux sur toutes les bases. La période de scrutation Tv des pages Pv peut être faible si le contenu de celles-ci change souvent (15 minutes par exemple). Cependant le locataire devra prendre garde qu'un grand nombre de terminaux sollicitera considérablement son serveur de pages Pv. Le contenu des pages Pv n'est pas contrôlé par le loueur qui met uniquement à disposition des « emplacements » de pages sur les terminaux aux locataires qui les utilisent comme ils l'entendent. Néanmoins, la reconfiguration de la page Pm dans le serveur du loueur permet de retirer l'accès à une page Pv spécifique de l'ensemble des terminaux en un temps maximum spécifié par Tm.

Selon une autre caractéristique de l'invention, l'accès auxdites pages Pv peut être limité et contrôlé par le serveur distant Sv par les paramètres fournis PAv dans la requête de la base (comme par exemple un numéro de série identifiant la base avec en sus un numéro relatif d'utilisateur utilisant cette base) de sorte que si plusieurs bases (fournissant donc des paramètres différents) lisent cette page, le contenu de la page effectivement fourni à une base lui sera spécifique. Le serveur Sv à réception de la requête et des paramètres PAv peut reconnaître la base distante à partir d'une base données et particulièrement à un utilisateur ayant souscrit à des services et lui renvoyer des informations spécifiques, qu'elles soient par exemple générales mais payantes ou d'ordre personnel et particularisé.
De la même manière, la page Pm générée par le serveur Sm peut être particularisée selon des paramètres très analogues à PAv de sorte que des ensembles d'utilisateurs peuvent être définis par Sm et des sous ensembles par les serveurs Sv.

En outre certaines mini-pages « normales » peuvent contenir des informations dont l'usager souhaite être prévenu quand elles satisfont au critère de nouveauté. Par exemple, l'utilisateur veut être prévenu en cas de nouveauté sur un « blog ». Le lecteur doit également garder à l'esprit que des informations provenant d'Internet peuvent être déjà le fait de la synthèse de données qu'il a personnellement sélectionnées (par exemple certains cours d'actions de bourse) et provenant de différents fournisseurs de « contenus » et que leur existence peut dépendre de conditions dont l'utilisateur souhaite être averti au plus vite. Ainsi le travail de synthèse effectué par la base selon ces différentes interfaces frontales peut être opéré en réalité sur des données déjà synthétisées en amont par un prestataire de service par exemple.

La base peut en fonction du terminal qui en fait la demande lui signaler la présence d'une page nouvelle selon un mode apparaissant comme spontané, c'est-à-dire sans que l'utilisateur ait à manipuler le terminal. Par défaut seul le dernier terminal qui a accédé à une mini-page selon la volonté de l'utilisateur U bénéficie de ce service. Pour cela, le terminal scrute de manière périodique (toutes les cinq minutes par exemple) la base de manière masquée, c'est-à-dire sans intervention de l'utilisateur. Si celle lui retourne une information de nouveauté - laquelle est paramétrée - celui-ci peut alors un émettre un « bip » parmi une liste de « bip » possibles. Par exemple, le cas où le terminal est partagé entre plusieurs utilisateurs est considéré avec l'émission du « bip » personnel de U.

Une forme de réalisation de l'invention est décrite ci-après à titre d'exemple, en référence aux dessins annexés dans lesquels :
- La figure 1 montre la vue générale du système de consultation avec un terminal orienté « son »,
- La figure 2 montre un terminal orienté « image » conforme à l'invention,
- La figure 3 montre un exemple de structure de pages hypertextes manipulée par le dispositif objet de l'invention,
- La figure 4 montre une vue générale du système communiquant par internet avec différents serveurs de « locataires » et différentes bases.

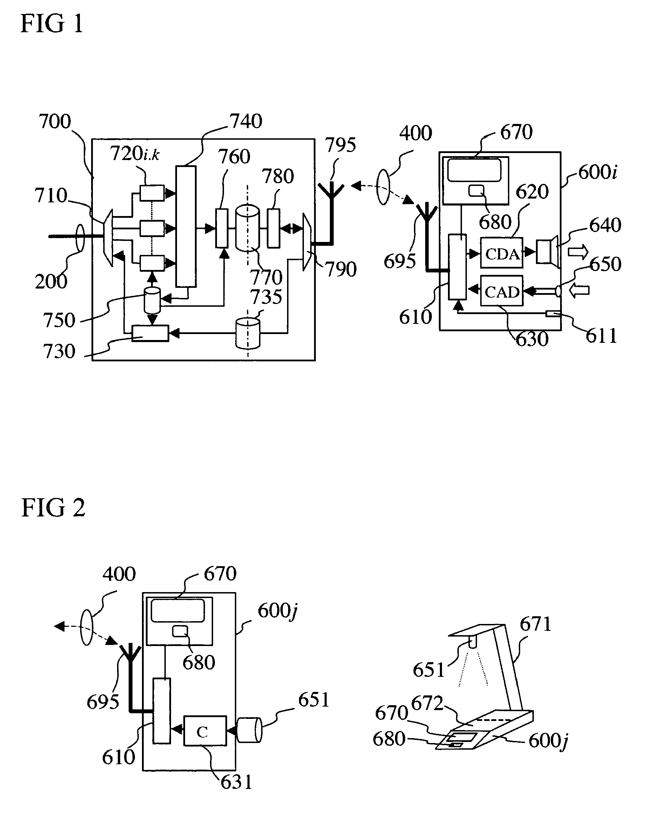

La figure 1 donne la vue générale du système de consultation conforme à l'invention.
La connexion de la base 700 à Internet s'effectue par le lien 200 qui est classiquement de type réseau local Ethernet. Ce réseau peut être également de type sans fil WLAN (Wireless Lan). Il est à noter que la base peut être intégrée à d'autres équipements de réseaux pour en réduire le coût, comme par exemple un modem-routeur ADSL (Asymmetric Digital Subscriber Line). D'autre part, la base dispose d'une interface radio 795 vers un réseau sans fil basse consommation 400 qui peut être par exemple de type réseau local à 2,4Ghz (par exemple Zigbee, www.zigbee.org) ou bien fonctionner sur des fréquences spécifiques dite ISM (Industrial Scientific, Medical). La base est « serveur » vis-à-vis des terminaux 600i « clients ». Ces derniers sont connectés audit réseau sans fil et peuvent être de même type ou hétérogènes.

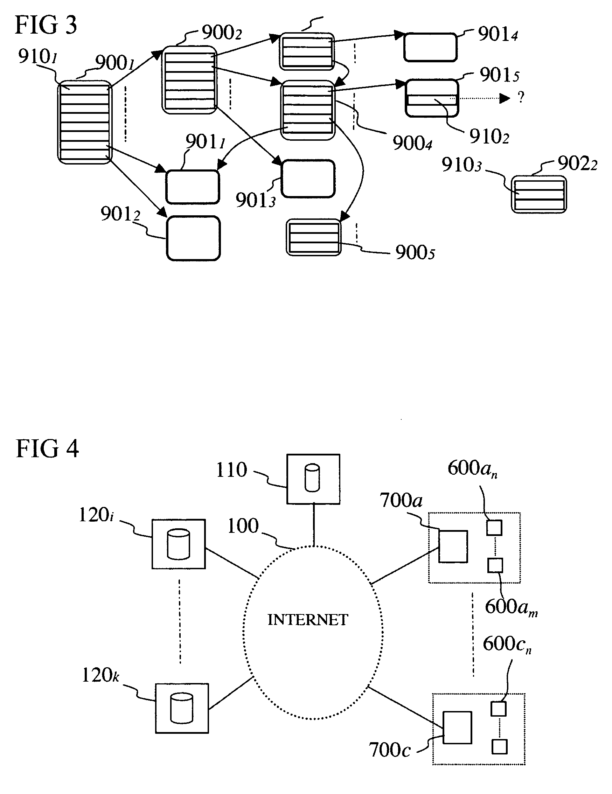

L'interface de réseau 710 fédère les connexions établies avec les différentes entités internes de la base. A savoir les interfaces frontales 720_{i...k} qui peuvent être de type « client » ou « serveur ». Selon l'exemple de réalisation, 720₁ est un dispositif antémémoire de courriels remplissant une fonction telle que décrite dans la demande brevet FR 0401312, différents comptes emails sont scrutés et les données locales mises en adéquation avec les données présentes sur lesdits comptes email. L'interface 720₂ scrute périodiquement des pages Web selon le protocole HTTP et calcule une signature (appelée communément « checksum ») pour déterminer si lesdites pages ont été modifiées depuis leur dernière lecture. La comparaison entre cette signature et la précédente permet de statuer de sa nouveauté et de fabriquer un témoin booléen analogue à l'apparition d'un nouveau message de type email. A noter que le langage de représentation tel « HTML » peut également fournir un numéro qui change à chaque modification de page et qui de facto en modifie la signature.
Les paramètres nécessaires aux interfaces frontales 720₁ et 720₂ sont stockées dans la mémoire de paramètres 750 préférentiellement de type sauvegardée, c'est-à-dire à l'abri des coupures d'alimentation. Les données lues par ces interfaces frontales sur les serveurs distants sont mémorisées dans la base de données 770. L'interface frontale 720₃ de type serveur HTTP sert essentiellement à la configuration interne et l'administration de l'équipement 700. Elle présente des écrans de saisie de paramètres à l'utilisateur, lesquels paramètres sont mémorisés ensuite dans ladite mémoire sauvegardée 750 pour être exploités ultérieurement par les interfaces frontales 720₁ et 720₂. Le bloc 740 authentifie le type de données le traversant, à savoir des données à destination de la base de données 770 ou de la mémoire sauvegardée, car les interfaces frontales 720₁ et 720₂ peuvent également fournir à destination de cette mémoire des données signalées par une syntaxe particulière. En effet, la configuration par la voie normale du serveur HTTP embarqué 720₃ impose à l'utilisateur de disposer d'un ordinateur. Pour échapper à cette contrainte et selon le mode opératoire déjà évoqué, une tierce personne fournit à distance sur un compte email prédéterminé ou au travers d'une page sur un serveur HTTP, les paramètres P nécessaires à la configuration personnelle de l'utilisateur sans ordinateur. Pour cela, une fois les données P lues par une interface frontale, le bloc 740 doit authentifier ces paramètres avec une syntaxe particulière (mot clé) et préférentiellement avec un mot de passe, que l'utilisateur aura préalablement fourni à ladite tierce personne par téléphone par exemple. Si le mot de passe contenue dans P correspond du mot de passe fourni oralement, les données P sont introduites dans la mémoire de paramètres 750.
Selon un autre mode opératoire déjà évoqué de diffusion d'informations et tel que représenté figure 4, la base 700a sollicite à son démarrage et selon sa configuration usine un serveur maître Sm numéroté 110 lequel lui retourne les paramètres d'accès à différentes pages Pv disposées sur des serveurs Sv locataires *120i...k.* Les pages accédées sur les serveurs Sv au travers d'Internet 100 sont alors introduites dans la base 700a (et sa base de données 770) pour être rendues disponibles à ses terminaux 600a_{*n*..*m*}. Outre la diffusion d'informations générales et de publicités selon les pages Pv, les paramètres de la requête de 700a aux serveurs 110 et 120 permettent de particulariser le contenu des pages Pv selon la base et ses utilisateurs pour offrir des services personnalisés. Pour cela, lesdits utilisateurs se seront préalablement enregistrés auprès des serveurs distants 110 et/ou 120 (nécessitant un identifiant unique de la base et/ou ses utilisateurs) selon des moyens non décrits ici. Il est à noter ici que lesdits paramètres PAv de requête de page Pv peuvent comporter également des informations propres au comportement de l'utilisateur tel que par exemple le nombre de fois que celui-ci a « clické » sur ladite page Pv à partir d'un terminal. En pratique, les paramètres PAv sont usuellement rencontrés et spécifiés après un « ? » suivant l'adresse du serveur http.

Lors de la saisie des pages par la base et si celles-ci ne sont pas authentifiées comme paramètres/commande (cas normal), elles sont émises vers le bloc d'entrée 760 qui doit les ranger dans la base de données sous forme de mini-pages 901*i*...*j* selon la figure 3. Celles-ci sont constituées usuellement de texte de type ASCII (American Standard Code for Information Interchange). Elles peuvent préserver des balises de présentation issues du texte d'origine, de type HTML par exemple, si les terminaux savent les exploiter ou des liens hypertextes dits « natifs » dont la gestion est détaillée dans ce document.

Ce bloc d'entrée est également en charge de mettre dans la base de données 770 les mini-pages représentées 901*i*...*j* et de mettre à jour les interdépendances via des mini-pages de présentation 900*k*...*m* conformément aux choix de présentation fixés dans la mémoire sauvegardée 750. Une mini-page de présentation est particulière dans la mesure où elle ne contient pas directement des données émanant des interfaces frontales mais connectent entre-elles les mini-pages émanant desdites interfaces frontales via des liens hypertextes. Ces mini-pages de présentation constituent essentiellement des listes d'items 910*s*..*v*, par exemple, liste d'utilisateurs, de pages HTML ou RSS, de comptes divers, liste de courriels. La longueur des items est variable et ceux-ci peuvent comporter des attributs relatifs à leur interface frontale respective, par exemple nombre de courriels d'un utilisateur ou dans un compte etc...

La structure d'une mini-page 900 est de manière minimale la suivante :
<entête & attributs><item1><item2><item*i*><item*N*>
Du texte peut éventuellement être inséré entre les entités comme le montre l'exemple:
<entête >Vos pages Web:<item1><item2><item*i*><item*N*>Fin!
Bien sûr la syntaxe ci-dessus est arbitraire et peut-être différente, en particulier, les langages HTML et XML spécifient une syntaxe de marqueurs de début et de fin qui peut être appliquée ici aux items.
L'entête contient des informations générales sur la mini-page, qui permettent d'afficher un champ d'information dans certaines zones de l'écran par exemple.
L'item contient un champ visualisable I*v*, un champ adresse la et son propre identifiant I*d* soit le triplet (I*d*, I*a*, I*v*). Par exemple, on aura un item « Météo » numéro 78 pointant vers la mini-page 1234 exprimé de la façon suivante : <78, *1234,* « *météo* »>. L'item est « clickable » de sorte qu'une nouvelle mini-page est appelée lorsqu'il est « cliqué » (activé). L'item sélectionné mais non encore cliqué peut être remarqué par une couleur ou un niveau de gris modifié, un mode vidéo inversé par exemple, de grande analogie avec les systèmes existants.
L'écran du terminal affichera par exemple avec 3 premiers items pointant vers des mini-pages 901 et un dernier item pointant vers une mini-page 900 :

| Vos pages Web : |
|---|
| **Météo** |
| **Horoscope** |
| **Trafic routier** |
| **Vers vos nouveaux messages** |
| Fin ! |

De la même façon et de manière transparente pour les terminaux, on pourrait avoir :

| Vos nouveaux messages : |
|---|
| **danielle.xxx@yy.fr** |
| **augustin.xxx@yy.fr** |
| **jean-pierre.zzz@sss.fr** |
| **Vers vos anciens messages** |
| **Vers vos pages Web** |
| Fin ! |

Le lecteur, s'il est habitué à Internet, n'aura aucun mal à comprendre cette méthode de navigation puisqu'il est coutumier de cette ergonomie.
L'item peut être enrichi d'autres champs d'attributs qui précisent sa nature, par exemple, par un champ supplémentaire spécifiant l'adresse d'une mini-page Pa représentante de l'invocation d'un menu d'actions (type « click droit sur souris »). Pa peut être mémorisée par le terminal pour éviter une requête émise vers la base à chaque fois. L'écran affichera par exemple :

| Actions possibles : |
|---|
| **Détruire le message** |
| **Retourner une photo** |
| **Retourner un message vocal** |
| **Entrer en mode interphone** |

Suite à la sélection d'une action sur un item donné, le terminal envoie une requête spécifique avec l'identifiant de l'item (ou l'adresse de mini-page) et l'action associée sélectionnée vers la base, laquelle va alors exécuter ladite action sur ledit objet sélectionné. Si l'action peut être localement exécutée par le terminal, alors aucune requête n'est adressée à la base.

La base de données 770 représentée figure 3 est en fait un système de fichiers rudimentaire où le bloc d'entrée 760 range lesdites mini-pages. Ces mini-pages sont interdépendantes entre elles au travers des liens hypertexte qu'elles contiennent. Leur somme constitue un « mini site » analogue à un site HTTP ordinaire. Cette collection de pages est consultée par les terminaux 600*i* au travers du bloc 780 qui doit prestement répondre à un terminal qui en fait une requête car le délai effectif correspond à une consommation d'énergie pour le terminal en état d'attente. Il est à noter que les tâches liées aux blocs d'entrée 760 et de sortie 780 sont asynchrones et s'exécutent indépendamment. Le bloc 780 doit en outre répondre à un terminal en prenant en compte les items dans ces mini-pages de sorte que les paquets émis vers ledit terminal contiennent des items « entiers ». Si le protocole radio autorise des paquets de taille infinie, c'est la mémoire du terminal qui sera rapidement limitante, le terminal spécifie alors à la base, la taille maximale disponible pour recevoir des items.

En outre lors d'un défilement de texte sur l'écran du terminal communément appelé « scrolling », le bloc 780 doit pouvoir répondre par les items suivants ou précédents un item défini à l'intérieur d'une mini-page de label Lp. Pour cela, et pour minimiser le temps d'accès à un item I*d*, une table d'index peut être établi par le bloc d'entrée 760 parallèlement aux mini-pages associées (I*d* -> *Lp,Loft)* qui lie l'item I*d* à un label de mini-page L*p* et un décalage L*off* qui pointe l'endroit où se trouve l'item dans cette page. Cette disposition offre l'avantage d'offrir un niveau d'indirection car il est à considérer que la mini-page peut évoluer au cours du temps alors que le terminal n'est pas mis à jour sur le champ, un décalage étant de peu d'utilité dans une page qui voit son contenu inopinément changer. Dans un but ici de simplification et sans que cela soit une obligation, les mini-pages issues des interfaces frontales ne contiennent pas d'items. Le terminal doit procéder en spécifiant à la base le label de la mini-page courante muni d'un paramètre de décalage dit « offset » qui s'exprime en termes d'octets. Un attribut dans l'entête de la mini-page courante acquis lors de son appel initial permet au terminal de savoir si son accès doit se faire selon cette méthode.
Cette méthode s'applique préférentiellement aux données relativement « statiques » émanant des interfaces frontales 720i..k. Le bloc 780 choisira alors une longueur de données à émettre compatible avec la longueur de paquet maximal supporté par le protocole radio du réseau sans fil et à nouveau de la mémoire du terminal disponible pour recevoir ces données.
Néanmoins cette méthode peut également s'appliquer aux mini-pages 900*k*...*m* par le bloc d'entrée 760 précités si la complexité est compatible avec la capacité de traitement du terminal, car d'une part le non cadrage d'items complique singulièrement sa réalisation et d'autre part, la modification dynamique d'une mini-page peut gravement désynchroniser le terminal de sa base à l'intérieur d'une mini-page.
Classiquement dans les langages de présentation de type HTML, la totalité des informations s'expriment en un flux de type texte ou « ASCII » facilement lisible et éditable. C'est par exemple le cas des liens hypertextes ou du contenu des balises. Il peut en être de même ici avec les identificateurs de mini-page, item, expression de décalage précités mais l'optimisation du remplissage des paquets peut mener de manière générale à exprimer certains champs de manière binaire de densité plus grande. Nombre d'optimisations peuvent être mises en oeuvre pour minimiser le trafic entre base et terminal.
Cette possibilité est d'autant plus envisageable que la portée d'un label de mini-page est purement locale, c'est-à-dire sans signification en dehors du système objet de l'invention. Les terminaux ayant des capacités assez rudimentaires, le bloc d'entrée 760 ou même les interfaces frontales 720₁ et 720₂ peuvent être amenés à supprimer nombre d'informations dans le flot de données qu'ils traitent puisque sans signification pour les terminaux, surchargeant inutilement le lien radio, et gaspillant les ressources énergétiques desdits terminaux. Les liens hypertextes contenus dans une page Web par exemple sont inutiles puisque les adresses pages réellement scrutées par les terminaux sont consignées dans la mémoire sauvegardée 750 et Internet indisponible directement à partir desdits terminaux. Le bloc d'entrée doit donc « traduire » la page entrante issue d'une interface frontale en une mini-page intelligible pour les terminaux. En pratique cela revient surtout, si les terminaux sont peu évolués, à retirer les balises HTML qu'elle contient ou le texte contenu entre certaines balises. Ensuite un item 910x de référence à cette nouvelle mini-page 901x est donc ajouté ou mis à jour dans sa mini-page de rattachement 901 z (où se situe une liste d'items dont 910*x*) pour permettre la navigation hypertexte jusqu'à 901x. La page de rattachement dépend de la configuration souhaitée et consignée dans la mémoire sauvegardée 750 selon des différents modes possibles de « look and feel ».

Selon une amélioration du système, les liens hypertextes dits « natifs » sont préservés et présentés aux terminaux, et en cas de sélection d'un desdits liens par un terminal, cette référence est reportée par un canal de communication non représenté figure 1, entre le bloc 780 et l'interface frontale 7202 de sorte que la page référencée est immédiatement recherchée par ladite interface frontale avant d'être retournée vers la base de donnée 770 selon la voie utilisés par les pages normalement consignées par la mémoire 750 et pour être rendue enfin disponible au terminal en ayant fait la demande. Une information de « non disponibilité » est retournée par le bloc 780 au terminal à chacune de ses requêtes espacés d'un certain laps de temps, tant que l'information n'est pas arrivée dans la base de données. Le terminal peut ainsi entrer dans une procédure d'économie d'énergie dite d'« attente passive » entre chaque requête à une page manquante sur la base 700. La même procédure peut être suivie pour des fichiers vocaux attachés à des pages et de manière générale à des fichiers attachés quelconques.

Alors que le travail du bloc d'entrée 760 correspond à une « fédération » de données pour former une arborescence de mini-pages dans la mémoire 770, le travail de bloc de sortie correspond à un travail de recherche et de lecture. A titre de variante et si la puissance du microprocesseur de la base 700 le permet, le bloc de sortie 780 peut prendre à sa charge le travail dédié au bloc d'entrée 760 et donc « synthétiser » les mini-pages d'items à la volée, de sorte que la structure de données de la mémoire 770 devient arbitraire et non significative vis-à-vis de celle présentée aux terminaux, et la fonction du bloc d'entrée réduite à un simple travail d' « introduction » de données.

Le bloc 790 est chargé de soumettre au bloc de sortie les requêtes des terminaux portant sur la consultation de données contenues dans la base de données 770, le bloc de sortie lui retourne alors un paquet de données qu'il émet sur l'interface du réseau sans fil à destination du terminal ayant fait la requête. Le terminal peut aussi fournir des données à destination d'Internet de type texte, audio, image ou vidéo auquel cas ces données sont déposées dans une file d'attente 735 puis relut de manière asynchrone par le bloc d'envoi 730 qui les encapsule selon les spécifications protocolaires habituelles pour en faire un courriel par exemple. Outre les données annexées au flot desdites données, le bloc d'envoi dispose des données de la mémoire sauvegardée 730 pour émettre ce message vers sa destination muni des bons paramètres par l'intermédiaire d'un serveur SMTP (Simple Mail Transfer Protocol) ou FTP (File Transfer Protocol) par exemple. De manière classique, un courriel peut être adressé à un destinataire à l'origine de la génération d'une mini-page. Néanmoins, lorsqu'un message est généré sans qu'un destinataire circonstancié par une mini-page ne puisse être défini, un destinataire par défaut peut être choisi selon une consigne dans la mémoire sauvegardée 750.
De la même façon, suite à une opération particulière sur un terminal dont la base est avertie, celle-ci peut spontanément générer des informations consignées dans un message puis l'émettre vers un serveur. Ce dernier cas est particulièrement utile pour sauvegarder de manière distante et centralisée des fichiers d'état (appelé communément « log »), la génération d'annuaire ou d'alias.

Un terminal est en veille selon un mode qui économise drastiquement l'énergie consommée lorsque l'utilisateur ne se sert pas du terminal. Le courant consommé en veille par le terminal est typiquement de l'ordre de quelques dizaines micro-ampères et de quelques dizaines de milli-ampères en activité. La moyenne du courant consommé et de facto la longévité des piles et s'établit selon le ratio activité/veille.
Néanmoins, le peut se réveiller cycliquement selon une horloge interne pour émettre une requête auprès de la base pour connaître la présence de nouvelles mini-pages et la signaler aux utilisateurs potentiels. Cette fonction peut être inhibée dans l'obscurité, car détectée par un capteur de lumière 611 disposé sur le terminal constitué d'une photorésistance, une photodiode ou un phototransistor. En sus, la base peut également inhiber cette fonction selon certaines plages horaires consignées dans la mémoire sauvegardée 750.
La base mémorise le dernier terminal ayant accédé à une mini-page par la volonté d'un utilisateur, de sorte que si cette dernière est « beepable » en cas de nouveauté, la base signalera cette modification seulement sur ledit terminal. Cette disposition évite que de multiples terminaux émettent un beep et que seul le plus pertinent a *priori* fasse entendre un signal sonore. De plus, l'information de nouveauté associée à ladite page est invalidée quand la base à reçu un acquittement du terminal ou tout moyen permettant de statuer de la bonne réception de ladite information par ledit terminal. Cette disposition évite qu'un terminal n'émette un signal plusieurs fois pour une même mini-page nouvelle. Le signal sonore peut être paramétré de sorte que les utilisateurs potentiels puissent reconnaître de manière sonore par exemple, un nouveau courriel qui les concerne, une personne particulière leur ayant adressé un courriel etc... et être éventuellement sophistiqué de sorte que la base fasse parvenir une séquence sonore complexe de type synthèse vocale.
La base n'ayant pas de contraintes d'énergie peut de son coté simuler cette signalisation de manière visuelle, par exemple une diode de type électroluminescente de couleur différente pouvant être affecté à chaque utilisateur potentiel.

Le terminal 600i dispose d'une interface radio 695 qui lui permet d'accéder au réseau sans fil. Plusieurs terminaux 600i...k peuvent être connectés à la base 700 via le réseau sans fil. Le terminal dispose d'une interface homme-machine composé d'un écran LCD 670 et d'un dispositif ergonomique 680 de saisie qui vont lui permettre de naviguer dans les mini-pages présentées par la base. Ici un plaque sensitive au toucher permet à l'utilisateur de naviguer entre les mini-pages et en « tapotant » d'appeler une nouvelle mini-page ou d'opérer une action spécifique.

Le calculateur 610 opère de manière analogue mais plus primitive que les navigateurs (dits « web browsers ») disponibles sur ordinateur domestique. Selon un des caractéristiques de l'invention, l'appel manuel d'une action (équivalent au click droit de la souris sur les navigateurs) provoque l'appel d'une mini-page particulière Pa sur la base selon une procédure déjà décrite. Cette mini-page contient des items permettant d'associer des champs visualisables I*v* à soit des actions particulières du terminal, soit des actions particulières de la base repérée par des valeurs de I*a* ou I*d* particulières de l'item. Ces dernières actions particulières nécessitent un échange entre terminal et base selon d'un mode client/serveur identique à celui utilisé pour la navigation entre mini-pages.
De même, le terminal peut disposer d'une interface logicielle lui permettant des interactions particulières avec des serveurs disposés sur Internet, notamment l'émission ou la réception de flots de données. Elles se font bien entendu par l'intermédiaire de la base 700. Ainsi selon la figure 1, le terminal dispose d'un microphone incorporé tel que la voix puisse être échantillonnée via le convertisseur analogique/digital 630, puis envoyée sur la base sous forme d'un flux numérique. De la même façon, un haut parleur incorporé permet d'écouter des fichiers de type audio. Ces fichiers sont disposés sur la base dans la mémoire 770. A titre de variante, la base peut laisser ces fichiers sur les serveurs distant et les rapatrier à la volée « sur requête de terminal » selon un mode opératoire déjà décrit « d'attente passive ». L'utilisateur peut ainsi lire des courriels et y répondre par courriel vocal. De même, il peut lire des courriels vocaux. Le fichier sonore attaché au courriel expédié par la base 700 suit les standards établis, par exemple. *wav* ou .*mp3*, de sorte qu'il est interprétable par les ordinateurs personnels.
Selon une variante et amélioration, d'une part, la base dispose d'une interface frontale 720 mémorisant l'adresse IP de l'ordinateur d'où a émané un courriel. (Cette adresse est classiquement contenue dans le courriel). En outre, le bloc d'envoi 730 dispose des moyens pour établir une connexion directe vers ladite adresse IP sur un port donné de type TCP (Transmission Control Protocol) ou UDP (User Datagram Protocol) et la base distante (associée à ladite adresse IP) et bénéficie d'une interface frontale apte à recevoir cette connexion directe. D'autre part, le terminal distant a les moyens de rester en écoute permanente du réseau sans fil 400 de par son mode d'alimentation ou par réveil par la base. Ainsi un utilisateur, à partir d'un terminal, peut établir une communication directe vocale avec un utilisateur distant disposant d'un autre terminal selon un mode half-duplex ou full duplex selon les performances du dispositif et du réseau sans fil.

Selon la figure 2, le terminal dispose, à la place du système audio de précédent terminal, d'un capteur photographique 651 et d'un circuit réalisant la compression d'image 631 disposés selon une potence 671 supportant ledit capteur, à la façon d'une lampe de bureau dans laquelle le terminal pourrait être intégré. La base de ladite potence supporte l'essentiel des fonctions du terminal 600j. L'utilisateur peut ainsi lire des courriels et y répondre rapidement par un courriel « photo » qu'il rédige à la main par exemple sur un papier format « bloc-notes », visé par ledit capteur photographique sur la surface 672. Suivant la rédaction de la réponse, l'utilisateur actionne la prise de photo via un menu d'action. Le flot de données « image » compressé est alors transmis via les blocs 495 puis 790 vers la file d'attente 735 pour devenir fichier attaché à un courriel par le bloc 730.
Le fichier image attaché au courriel expédié par la base 700 suit les standards établis tel *.jpg* du JPEG (Joint Photographic Experts Group) de sorte qu'il est visualisable par les ordinateurs personnels.

Naturellement, un terminal pourrait cumuler les fonctionnalités des deux terminaux venant d'être décrits ou en représenter une version simplifiée.

Le système objet de l'invention peut être réalisé avec les microcontrôleurs ou microprocesseurs disponible sur du marché munis de RAM, ROM et autres périphériques aptes à piloter les couches physiques du réseau sans fil 400 ainsi que le réseau local 200.

Selon une implémentation particulière, l'invention se traduit par un système de communication comprenant une pluralité de terminaux domestiques sans fil (600) connectés à une même base (700) par un sous-réseau sans fil (400) et une interface (695). La base collecte des informations présentées sur Internet par différents serveurs via son interface (710) vers un réseau local 200. Elle convertit ces informations en pages selon un format commun pour les stocker dans une base données locales (780),
La base est apte à lier lesdites pages par d'autres pages comportant des items selon des règles fixes ou variables disposées dans une mémoire de paramètres (750). Ces items sont essentiellement et unitairement constitués d'un lien hypertexte vers une page et d'un identifiant d'item qui le désigne,
La base fournit auxdits terminaux le contenu desdites pages de manière fractionnée en référence à un identifiant de page ou un identifiant d'item selon un mode client-serveur,
Chaque terminal dispose d'un écran de visualisation et des moyens nécessaires pour naviguer entre les pages et éventuellement d'actionner des opérations spécifiques portant sur lesdites pages et lesdits items qu'elles contiennent,
La base fournit, en réponse à une requête du terminal portant sur le défilement au sein d'une page respectivement en arrière ou en avant, un ou plusieurs items placés avant ou après un item de référence désigné par ledit terminal dans ladite requête,
Elle fournit en réponse à une requête du terminal un nombre d'items borné par les capacités dudit terminal ou par la taille du paquet de transmission sur le réseau sans fil,
Le réseau sans fil est crypté et que la base dispose d'un contacteur matériel ou logiciel par son système d'administration qui, lorsqu'il est activé par l'utilisateur, autorise la base à fournir temporairement la clé de cryptage du réseau sans fil, au terminal qui en fait la demande ou spontanément au terminal qui présente des paquets qui manifestement sont cryptés avec une clé erronée dans ses requêtes.

## Revendications

1. Procédé pour l'accès, par un terminal (600) disposant d'un moyen unique d'édition (610) de contenus, à des contenus numériques hétérogènes disponibles à des adresses réseau (200) d'un réseau, **caractérisé en ce qu'**il comprend :
- une première étape asynchrone audit terminal, exécutée exclusivement sur un serveur (700) disposant de ressources mémoires (750, 770) et de traitement (740, 760, 780), la première étape comprenant :
o la consultation d'adresses réseau par le serveur pour la récupération de contenus numériques, ladite consultation étant effectuée à l'initiative dudit serveur selon des paramètres d'adresses réseau stockés dans une base de données de paramètres (750), lesdites adresses réseaux correspondant à des sources de contenus hétérogènes et
o le prétraitement des contenus comprenant la conversion, dans un format commun, desdits contenus récupérés quelque soit leur format d'origine, ledit format commun étant visualisable par l'unique moyen d'édition (610),
o le stockage desdits contenus convertis, dans une base de données de contenus (770) dudit serveur,
o le référencement desdits contenus stockés dans une structure d'arborescence de sorte à associer lesdits contenus entre eux,
- une étape de transmission, en réponse à une requête en consultation contenant un paramètre d'adresse réseau émise par ledit terminal, d'au moins une partie du contenu converti associé audit paramètre de la requête et stocké dans la base de données de contenus,
- une étape d'affichage de ladite partie de contenu par le terminal.

2. Procédé selon la revendication 1, dans lequel ladite première étape comprend, en outre, le référencement desdits contenus stockés dans une structure sous forme de graphe de sorte à associer lesdits contenus entre eux.

3. Procédé selon l'une quelconque des revendications précédentes, dans lequel ladite partie du contenu transmise est délimitée par la taille des paquets mis en oeuvre sur un réseau sans fil (400) connectant ledit terminal (600) audit serveur (700) et par des balises de segmentation disposés dans les contenus stockés.

4. Procédé selon l'une quelconque des revendications précédentes, comprenant, en outre, une étape de défilement dudit contenu lors de l'affichage par le terminal (600), ledit défilement comprenant :
- l'émission par le terminal d'une requête en consultation, la requête incluant un identifiant du contenu en cours d'affichage et un paramètres de décalage associé à ladite partie du contenu,
- la détermination, par ledit serveur à réception de la requête, d'une autre partie dudit contenu en fonction desdits identifiant et paramètre de décalage, et
- la réception et l'affichage de ladite autre partie de contenu par le terminal.

5. Procédé selon l'une quelconque des revendications précédentes, comprenant, pour un desdits contenus, la mémorisation, par le serveur (700), du dernier terminal (600) ayant émis une requête en consultation dudit contenu,
procédé dans lequel ladite consultation d'adresses réseau est effectuée périodiquement,
le procédé comprenant, en outre, :
- lors de la consultation périodique d'adresses réseau, la détection d'une modification dudit contenu hétérogène,
- en cas de modification dudit contenu :
o l'exécution des étapes de récupération, prétraitement et stockage sur ledit contenu modifié.
o la signification audit dernier terminal mémorisé que ledit contenu a été modifié.

6. Procédé selon l'une quelconque des revendications précédentes, dans lequel ledit terminal est généralement dans un état de veille électrique et se réveille de l'état de veille pour transmettre ladite requête en consultation et revient dans l'état de veille électrique après réception et interprétation de la réponse à ladite requête en consultation.

7. Procédé selon l'une quelconque des revendications précédentes, dans lequel ledit terminal est équipé d'un module de communication sans fil pour se connecter audit serveur (700), ledit module de communication se réveillant périodiquement pour détecter la présence d'une porteuse émise par ledit serveur antémémoire.

8. Procédé selon l'une quelconque des revendications précédentes, dans lequel ledit serveur (700) se connecte périodiquement à un serveur distant et télécharge des données pour mettre à jour les paramètres enregistrés dans la base de données des paramètres.

9. Système d'édition de contenus hétérogènes provenant d'un réseau (200), le système comprenant un serveur (700) connecté audit réseau et une pluralité de terminaux (600) connectés audit serveur,
- les terminaux disposant d'un moyen unique d'édition (610) des contenus hétérogènes,
- le serveur disposant
o des moyens de récupération (710, 720) asynchrone des contenus de formats hétérogènes comprenant un espace mémoire (750) pour l'enregistrement d'un ensemble d'adresses réseaux de contenus,
o de moyens de réception (710, 720) desdits contenus correspondant chacun à un format,
o de moyens de conversion et de stockage (760) des contenus provenant desdits moyens de réception sous des formats hétérogènes en des contenus enregistrées dans une base de données de contenus (770) du serveur sous un format commun,
o de moyen de référencement des contenus dans une structure arborescente de sorte à associer lesdits contenus entre eux,
o de moyens de communication (780, 790) aptes à transmettre, sur requête en consultation d'un desdits terminaux, au moins une partie de contenu associé à un paramètre, ledit paramètre étant contenu dans ladite requête du terminal.

10. Système selon la revendication précédente, dans lequel lesdites adresses réseau sont groupées selon des critères de l'utilisateur, et ladite structure d'arborescence est stockée en mémoire sous la forme de tables associées auxdits groupes, chaque table comprenant des identifiants de contenus récupérés depuis une adresse réseau du groupe associé à ladite table,
lesdits moyens de conversion étant aptes à convertir lesdites tables associées aux groupes et/ou métagroupes en des contenus dans le format commun pour permettre leur affichage par les terminaux.
